# EUROPEAN PATENT APPLICATION

(11) **EP 3 471 365 A1**
(43) Date of publication of application: **17.04.2019**
(21) Application number: 16908511.5
(22) Date of filing: 15.07.2016
(51) Int. Cl.: H04L 29/06

(54) **KEY ACQUISITION METHOD AND APPARATUS**

(71) Applicant: Huawei Technologies Co., Ltd., Longgang District Shenzhen, Guangdong 518129 (CN)
(72) Inventor: LI, He, Shenzhen Guangdong 518129 (CN); CHEN, Jing, Shenzhen Guangdong 518129 (CN); WANG, Jiangsheng, Shenzhen Guangdong 518129 (CN)
(74) Representative: Gill Jennings & Every LLP
(86) International application number: PCT/CN2016/090231
(87) International publication number: WO 2018/010186

(57) **Abstract**

Embodiments of the present invention provide a key obtaining method and apparatus. The method includes: receiving, by a terminal, a selected key generation capability from a network element, where the selected key generation capability is used to indicate a key generation capability that is determined by the network element based on a first key generation capability combination, and the first key generation capability combination includes at least one key generation capability of the terminal; and generating, by the terminal, a first key parameter and a first base key based on the selected key generation capability. In this way, the first key generation capability combination is considered in generation of the key parameter and the key, so that key reliability is greatly improved.

## Description

### TECHNICAL FIELD

The present invention relates to communications technologies, and in particular, to a key obtaining method and apparatus.

### BACKGROUND

An authentication and key agreement (authentication and key agreement, AKA for short) process completes an authentication and key agreement function. During the authentication process, a terminal considers a network as real and the network also considers the terminal as real. During key agreement, the terminal and the network can have same encryption and decryption keys and a same integrity key. An encryption key is used to encrypt information transmitted between a terminal and a network element, to ensure that the message cannot be understood by a third party. An integrity key is to ensure that the message is not tampered with. The encryption and decryption keys and the integrity key jointly ensure security of the information transmitted between the terminal and the network element.

In the prior art, a whole AKA process relies on same encryption information that a terminal side and a network element side have. The encryption information is usually a long-term key, and is used to generate encryption and decryption keys and an integrity key. However, the encryption and decryption keys and the integrity key are easily cracked in the prior art.

### SUMMARY

Embodiments of the present invention provide a key obtaining method and apparatus, to improve security during an authentication and key agreement process.

A first aspect of the embodiments of the present invention provides a key obtaining method, including:
receiving, by a terminal, a selected key generation capability from a network element, where the selected key generation capability is used to indicate a key generation capability that is determined by the network element based on a first key generation capability combination, and the first key generation capability combination includes at least one key generation capability of the terminal; and
generating, by the terminal, a first key parameter and a first base key based on the selected key generation capability.

Optionally, the selected key generation capability is used to indicate the key generation capability that is determined by the network element based on the first key generation capability combination and priorities corresponding to key generation capabilities.

Optionally, before the receiving, by a terminal, a selected key generation capability sent by a network element, the method further includes:
sending, by the terminal, the first key generation capability combination to the network element.

Optionally, the method further includes:
receiving, by the terminal, to-be-authenticated information from the network element, where the to-be-authenticated information includes a second key generation capability combination, and the second key generation capability combination includes at least one key generation capability; and
parsing, by the terminal, the to-be-authenticated information, and determining whether the second key generation capability combination included in the to-be-authenticated information is the same as the first key generation capability combination.

Optionally, the to-be-authenticated information is an authentication management field AMF; and
the parsing, by the terminal, the to-be-authenticated information, and determining whether the second key generation capability combination included in the to-be-authenticated information is the same as the first key generation capability combination includes:
parsing, by the terminal, the AMF, and determining whether the second key generation capability combination included in the AMF is the same as the first key generation capability combination.

Optionally, the to-be-authenticated information is a message authentication code MAC, and the MAC is generated by a server through calculation based on the first key generation capability combination; and
the parsing, by the terminal, the to-be-authenticated information, and determining whether the second key generation capability combination included in the to-be-authenticated information is the same as the first key generation capability combination includes:
obtaining, by the terminal, an expected message authentication code XMAC through calculation based on the first key generation capability combination; and
determining, by the terminal, that the second key generation capability combination is the same as the first key generation capability combination when the terminal determines that the XMAC is the same as the MAC.

Optionally, the receiving, by a terminal, a selected key generation capability from a network element includes:
receiving, by the terminal, an authentication request sent by the network element, where the authentication request includes the selected key generation capability.

Optionally, the authentication request further includes any one or combination of the following: a security capability of the terminal, the second key generation capability combination, a selected integrity algorithm, and a selected encryption algorithm.

The security capability of the terminal includes at least one encryption algorithm and at least one integrity algorithm of the terminal.

The authentication request is an authentication request on which integrity protection has been performed.

Optionally, the generating, by the terminal, a first key parameter and a first base key based on the selected key generation capability includes:
generating, by the terminal, the first key parameter and the first base key after determining that the second key generation capability combination included in the to-be-authenticated information is the same as the first key generation capability combination.

Optionally, the method further includes:
obtaining, by the terminal, a second key parameter sent by the network element, where the second key parameter is a key parameter generated by the network element based on the selected key generation capability; and
the generating, by the terminal, a first key parameter and a first base key based on the selected key generation capability includes:
   generating, by the terminal, the first key parameter based on the selected key generation capability; and
   generating, by the terminal, the first base key based on the first key parameter and the second key parameter.

Optionally, the receiving, by a terminal, a selected key generation capability sent by a network element includes:
receiving, by the terminal, a NAS SMC sent by the network element, where the NAS SMC includes the selected key generation capability.

Further, the non-access stratum security mode command further includes a second key parameter, a second key generation capability combination, a security capability of the terminal, a selected integrity algorithm, and a selected encryption algorithm, and the second key parameter is a key parameter generated by the network element based on the selected key generation capability; and
the generating, by the terminal, a first key parameter and a first base key based on the selected key generation capability includes:
authenticating, by the terminal, integrity of the non-access stratum security mode command based on the non-access stratum security mode command;
generating, by the terminal, the first key parameter based on the selected key generation capability after the authentication performed on the integrity of the non-access stratum security mode command succeeds; and
generating, by the terminal, the first base key based on the first key parameter and the second key parameter.

Optionally, after the generating, by the terminal, a first key parameter and a first base key based on the selected key generation capability, the method further includes:
sending, by the terminal, the first key parameter to the network element.

Optionally, after the generating, by the terminal, a first key parameter and a first base key based on the selected key generation capability, the method further includes:
generating, by the terminal, a non-access stratum key based on the first base key, where the non-access stratum key includes a non-access stratum encryption key and a non-access stratum integrity key.

Optionally, the sending, by the terminal, the first key parameter to the network element includes:
generating, by the terminal, a non-access stratum security mode complete command, where the non-access stratum security mode complete command carries the first key parameter;
performing, by the terminal, integrity protection on the non-access stratum security mode complete command by using the non-access stratum integrity key; and
sending, by the terminal to the network element, the non-access stratum security mode complete command on which the integrity protection has been performed.

A second aspect of the embodiments of the present invention provides a key obtaining method, including:
generating, by a terminal, a third key parameter based on a first key generation capability combination, where the first key generation capability combination includes at least one key generation capability of the terminal;
sending, by the terminal, the third key parameter to the network element;
receiving, by the terminal, a fourth key parameter sent by a base station; and
generating, by the terminal, a second base key based on the third key parameter and the fourth key parameter.

Further, the terminal generates an access stratum key based on the second base key. The access stratum key includes any one or combination of the following: an access stratum encryption key, an access stratum integrity key, a user plane encryption key, and a user plane integrity key.

Optionally, after the generating, by the terminal, a first key parameter and a first base key based on the selected key generation capability, the method further includes:
receiving, by the terminal, a fourth key parameter sent by a base station; and
generating, by the terminal, an access stratum key based on the first key parameter and the fourth key parameter.

Optionally, the terminal generates the second base key based on the fourth key parameter and the third key parameter, and generates an access stratum key based on the second base key.

A third aspect of the embodiments of the present invention provides a key obtaining method, including:
determining, by a network element, a selected key generation capability based on a first key generation capability combination, where the first key generation capability combination includes at least one key generation capability of the terminal;
sending, by the network element, the selected key generation capability to the terminal; and
receiving, by the network element, a first key parameter sent by the terminal, where the first key parameter is generated by the terminal based on the selected key generation capability.

Optionally, the network element determines the selected key generation capability based on the first key generation capability combination and priorities corresponding to key generation capabilities.

Optionally, before the determining, by a network element, a selected key generation capability based on a first key generation capability combination, the method further includes:
receiving, by the network element, the first key generation capability combination sent by the terminal.

Optionally, the method further includes:
sending, by the network element, a to-be-authenticated message to the terminal, where the to-be-authenticated message includes a second key generation capability combination.

Before the sending, by the network element, a to-be-authenticated message to the terminal, the method further includes:
sending, by the network element, the first key generation capability combination to a server; and
receiving, by the network element, the to-be-authenticated message that is sent by the server based on the first key generation capability combination.

Optionally, the to-be-authenticated information is an authentication management field AMF. Optionally, the to-be-authenticated information is a message authentication code MAC.

Optionally, the sending, by the network element, the selected key generation capability to the terminal includes:
sending, by the network element, an authentication request to the terminal, where the authentication request includes the selected key generation capability.

The authentication request further includes any one or combination of the following: a security capability of the terminal, the second key generation capability combination, a selected integrity algorithm, and a selected encryption algorithm.

Optionally, the sending, by the network element, an authentication request to the terminal includes:
performing, by the network element, integrity protection on the authentication request; and
sending, by the network element to the terminal, the authentication request on which integrity protection has been performed.

Optionally, after the receiving, by the network element, a first key parameter sent by the terminal, the method further includes:
generating, by the network element, a first base key based on the first key parameter.

The generating, by the network element, a first base key based on the first key parameter includes:
generating, by the network element, a second key parameter based on the selected key generation capability; and
generating, by the network element, the first base key based on the first key parameter and the second key parameter.

Further, the sending, by the network element, the selected key generation capability to the terminal includes:
sending, by the network element, a non-access stratum security mode command to the terminal, where the non-access stratum security mode command includes the selected key generation capability.

The non-access stratum security mode command further includes a second key parameter, a second key generation capability combination, a security capability of the terminal, a selected integrity algorithm, and a selected encryption algorithm, and the second key parameter is a key parameter generated by the network element based on the selected key generation capability.

A fourth aspect of the embodiments of the present invention provides a key obtaining method, including:
obtaining, by a base station, a selected key generation capability, where the selected key generation capability is determined based on a first key generation capability combination;
generating, by the base station, a fourth key parameter based on the selected key generation capability; and
sending, by the base station, the fourth key parameter to the terminal.

Optionally, the method further includes:
receiving, by the base station, a first key parameter sent by the network element; and
generating, by the base station, an access stratum key based on the first key parameter and the fourth key parameter.

Optionally, the method further includes:
receiving, by the base station, a third key parameter sent by the terminal, where the third key parameter is generated based on the first key generation capability combination; and
generating, by the base station, an access stratum key based on the third key parameter and the fourth key parameter.

The selected key generation capability determined by the network element is referred to as a first selected key generation capability, and the selected key generation capability determined by the base station is referred to as a second selected key generation capability.

A fifth aspect of the embodiments of the present invention provides a key obtaining apparatus, where the apparatus includes a module or means (means) configured to perform the method provided in the first aspect and various implementations of the first aspect.

A sixth aspect of the embodiments of the present invention provides a key obtaining apparatus, where the apparatus includes a module or means configured to perform the method provided in the second aspect and various implementations of the second aspect.

A seventh aspect of the embodiments of the present invention provides a key obtaining apparatus, where the apparatus includes a module or means configured to perform the method provided in the third aspect and various implementations of the third aspect.

An eighth aspect of the embodiments of the present invention provides a key obtaining apparatus, where the apparatus includes a module or means configured to perform the method provided in the fourth aspect and various implementations of the fourth aspect.

A ninth aspect of the embodiments of the present invention provides a key obtaining apparatus, where the apparatus includes a processor and a memory. The memory is configured to store a program, and the processor invokes the program stored in the memory, to perform the method provided in the first aspect of the embodiments of the present invention.

A tenth aspect of the embodiments of the present invention provides a key obtaining apparatus, where the apparatus includes a processor and a memory. The memory is configured to store a program, and the processor invokes the program stored in the memory, to perform the method provided in the second aspect of the embodiments of the present invention.

An eleventh aspect of the embodiments of the present invention provides a key obtaining apparatus, where the apparatus includes a processor and a memory. The memory is configured to store a program, and the processor invokes the program stored in the memory, to perform the method provided in the third aspect of the embodiments of the present invention.

A twelfth aspect of the embodiments of the present invention provides a key obtaining apparatus, where the apparatus includes a processor and a memory. The memory is configured to store a program, and the processor invokes the program stored in the memory, to perform the method provided in the fourth aspect of the embodiments of the present invention.

A thirteenth aspect of the embodiments of the present invention provides a key obtaining apparatus, including at least one processing component (or chip) configured to perform the method in the first aspect.

A fourteenth aspect of the embodiments of the present invention provides a key obtaining apparatus, including at least one processing component (or chip) configured to perform the method in the second aspect.

A fifteenth aspect of the embodiments of the present invention provides a key obtaining apparatus, including at least one processing component (or chip) configured to perform the method in the third aspect.

A sixteenth aspect of the embodiments of the present invention provides a key obtaining apparatus, including at least one processing component (or chip) configured to perform the method in the fourth aspect.

According to the key obtaining method and apparatus that are provided in the embodiments of the present invention, the network element determines the selected key generation capability based on the first key generation capability combination, and sends the selected key generation capability and the corresponding second key parameter to the terminal; and the terminal generates the first key parameter and the first base key based on the selected key generation capability, and sends the first key parameter to the network element, so that the network element further generates the first base key based on the first key parameter and the second key parameter. A key generation capability selection mechanism can greatly facilitate subsequent adding of a new key generation capability and prevent selection of an insecure key generation capability, so that flexibility and security can be improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may derive other drawings from these accompanying drawings without creative efforts.
FIG. 1 is a schematic diagram of a system architecture for a key obtaining method according to the present invention;
FIG. 2 is a schematic flowchart of a key obtaining method according to an embodiment of the present invention;
FIG. 3 is a schematic flowchart of another key obtaining method according to an embodiment of the present invention;
FIG. 4 is a schematic flowchart of another key obtaining method according to an embodiment of the present invention;
FIG. 5 is a schematic flowchart of another key obtaining method according to an embodiment of the present invention;
FIG. 6 is a schematic flowchart of another key obtaining method according to an embodiment of the present invention;
FIG. 7 is a schematic flowchart of another key obtaining method according to an embodiment of the present invention;
FIG. 8 is a schematic flowchart of another key obtaining method according to an embodiment of the present invention;
FIG. 9 is a schematic flowchart of another key obtaining method according to an embodiment of the present invention;
FIG. 10 is a schematic structural diagram of a key obtaining apparatus according to an embodiment of the present invention;
FIG. 11 is a schematic structural diagram of another key obtaining apparatus according to an embodiment of the present invention;
FIG. 12 is a schematic structural diagram of another key obtaining apparatus according to an embodiment of the present invention;
FIG. 13 is a schematic structural diagram of another key obtaining apparatus according to an embodiment of the present invention; and
FIG. 14 is a schematic structural diagram of another key obtaining apparatus according to an embodiment of the present invention.

### DESCRIPTION OF EMBODIMENTS

AKA in embodiments of the present invention may be AKA in the Universal Mobile Telecommunications System (Universal Mobile Telecommunications System, UMTS for short), or AKA in the Long Term Evolution (Long Term Evolution, LTE for short) system, another communications system that uses Evolved Packet System (Evolved Packet System, EPS for short) AKA to perform authentication and key agreement, or the like. This is not limited herein.

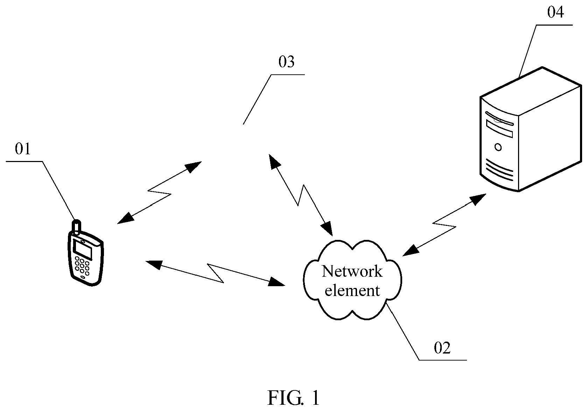

FIG. 1 is a schematic diagram of a system architecture for a key obtaining method according to the present invention. As shown in FIG. 1, the architecture may include a terminal 01, a network element 02, a base station 03, and a server 04.

The terminal 01 may be a wireless terminal or a wired terminal. The wireless terminal may refer to a device that provides a user with voice and/or other service data connectivity, a handheld device with a wireless connection function, or another processing device connected to a wireless modem. The wireless terminal may communicate with one or more core networks through a radio access network (Radio Access Network, RAN for short). The wireless terminal may be a mobile terminal, such as a mobile phone (also referred to as a "cellular" phone) or a computer with a mobile terminal, for example, may be a portable, pocket-sized, handheld, computer built-in, or in-vehicle mobile apparatus, which exchanges voice and/or data with the radio access network. For example, the wireless terminal is a device such as a personal communications service (Personal Communication Service, PCS for short) phone, a cordless telephone set, a Session Initiation Protocol (Session Initiation Protocol, SIP for short) phone, a wireless local loop (Wireless Local Loop, WLL for short) station, or a personal digital assistant (Personal Digital Assistant, PDA for short). The wireless terminal may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), or user equipment (User Device or User Equipment). This is not limited herein.

The network element 02 may be a mobility management entity (Mobility Management Entity, MME for short). This is not limited herein.

The base station 03 may be a base transceiver station (Base Transceiver Station, BTS for short) in Global System for Mobile Communications (Global System of Mobile communication, GSM for short) or Code Division Multiple Access (Code Division Multiple Access, CDMA for short), a NodeB (NodeB, NB for short) in Wideband Code Division Multiple Access (Wideband Code Division Multiple Access, WCDMA for short), an evolved NodeB (Evolutional Node B, eNB or eNodeB for short), a relay node, or an access point in LTE, a gNB in a future 5G network, or the like. This is not limited herein.

The server 04 may be a home subscriber server (Home subscriber server, HSS for short), another functional entity including an HSS, or the like. This is not limited herein.

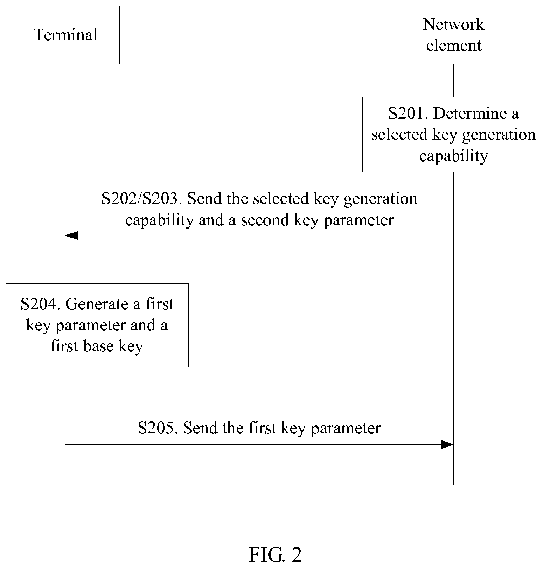

FIG. 2 is a schematic flowchart of a key obtaining method according to an embodiment of the present invention. As shown in FIG. 2, the method includes the following steps.

S201. A network element determines a selected key generation capability based on a first key generation capability combination.

Optionally, the network element determines the selected key generation capability based on the first key generation capability combination and priorities corresponding to key generation capabilities. However, no limitation is imposed thereto, and the selected key generation capability may alternatively be determined based on another preset rule, for example, a key generation capability type.

The priorities corresponding to the key generation capabilities may be preset in the network element, or the priorities corresponding to the key generation capabilities may be sent by another device such as a server or a terminal to the network element. This is not limited herein.

The first key generation capability combination may include at least one key generation capability of the terminal. To be specific, the first key generation capability combination is used to indicate the at least one key generation capability supported by the terminal. Alternatively, the terminal may generate a first key generation capability set by using some or all of key generation capabilities supported by the terminal.

The key generation capability may be a Diffie-Hellman (Diffie-Hellman, D-H for short) capability, an Elliptic Curve Cryptosystem (Elliptic Curve Cryptosystems, ECDH for short) capability, a key generation capability having a similar function, or the like. This is not limited herein.

S202. The network element sends the selected key generation capability and a second key parameter to a terminal. The second key parameter is determined by the network element based on the selected key generation capability.

S203. The terminal receives the selected key generation capability from the network element. The selected key generation capability is used to indicate a key generation capability that is determined by the network element based on the first key generation capability combination.

It should be noted that S202 is an optional step. The selected key generation capability may be proactively sent by the network element, or the selected key generation capability may be proactively obtained by the terminal from the network element.

Optionally, the terminal reports a security capability of the terminal to the network element.

S204. The terminal generates a first key parameter and a first base key based on the selected key generation capability.

A key generation capability selection mechanism can greatly facilitate subsequent adding of a new key generation capability and prevent selection of an insecure key generation capability, so that flexibility and security can be improved.

During a subsequent communication process, the first base key may be used as a key material to generate other keys (for example, an encryption key and an integrity key). This is not limited herein.

S205. The terminal sends the first key parameter to the network element.

In this way, the network element can also generate the first base key based on the first key parameter and the second key parameter. During a subsequent communication process, the first base key may be used as a key material to generate other keys (for example, an encryption key and an integrity key). This is not limited herein.

According to this embodiment, the network element determines the selected key generation capability based on the first key generation capability combination, and sends the selected key generation capability and the corresponding second key parameter to the terminal; and the terminal generates the first key parameter and the first base key based on the selected key generation capability, and sends the first key parameter to the network element, so that the network element further generates the first base key based on the first key parameter and the second key parameter. A key generation capability selection mechanism can greatly facilitate subsequent adding of a new key generation capability and prevent selection of an insecure key generation capability, so that flexibility and security can be improved.

Optionally, based on the foregoing embodiment, the terminal further sends the first key generation capability combination to the network element before S201. The network element determines the selected key generation capability after receiving the first key generation capability combination.

Generally, a key generation capability can be selected based on a priority list, and the selected key generation capability may be a key generation capability with a highest priority. However, no limitation is imposed thereto, and the selected key generation capability may alternatively be determined with reference to other factors. Priorities of key generation capabilities may be determined based on security of the key generation capabilities, priorities of key generation capabilities may be determined based on encryption and decryption speeds of the key generation capabilities, or priorities of key generation capabilities may be determined based on use frequency of the key generation capabilities. This is not limited herein.

Optionally, after receiving the first key generation capability combination sent by the terminal, the network element may send to-be-authenticated information to the terminal, where the to-be-authenticated information includes a second key generation capability combination. The terminal receives the to-be-authenticated information from the network element, and performs parsing to check (check) whether the second key generation capability combination in the to-be-authenticated information is the same as the first key generation capability combination. To be specific, the terminal authenticates the second key generation capability combination in the to-be-authenticated information, and determines whether at least one key generation capability in the second key generation capability combination is the same as at least one key generation capability in the first key generation capability combination sent by the terminal to the network element. After an authentication result indicates yes, the terminal performs subsequent operations such as generating the first base key.

The to-be-authenticated information may be an AMF or a MAC. This is not limited herein.

Optionally, the terminal may further receive, from the network element, a selected encryption algorithm, a selected integrity algorithm, and the like that are selected by the network element.

The generating, by the terminal, a first key parameter based on the selected key generation capability may be: generating, by the terminal, the first key parameter based on the selected key generation capability. This is not limited herein.

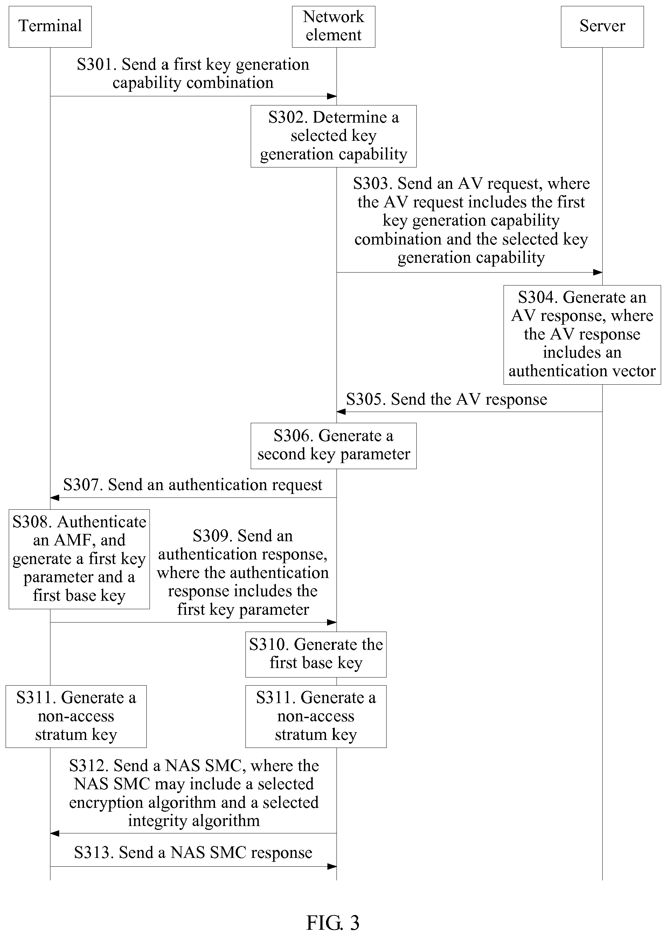

FIG. 3 is a schematic flowchart of another key obtaining method according to an embodiment of the present invention. As shown in FIG. 3, the method includes the following steps.

S301. A terminal sends a first key generation capability combination to a network element.

Optionally, the terminal sends an attach (attach) request message, where the attach request message includes the first key generation capability combination. Certainly, the first key generation capability combination may alternatively be sent by using another request message, and this is not limited herein. Similarly, this is not limited in all of the following embodiments.

The first key generation capability combination may be indicated by an identifier of at least one key generation capability, that is, the attach request message directly carries the identifier of the key generation capability included in the first key generation capability combination; or may be indicated by an indicator that is distributed by using a key generation capability, where the indicator that is distributed by using the key generation capability may be specifically used to indicate the key generation capability used by the terminal, for example, indicate a D-H capability used by the terminal.

Optionally, the attach request message may further include an identifier of the terminal, a security capability of the terminal, and the like. The identifier of the terminal may be an international mobile subscriber identity (International Mobile Subscriber Identification Number, IMSI for short) of the terminal. This is not limited herein. The security capability (Security capability) of the terminal may include an encryption algorithm and/or an integrity algorithm.

Optionally, all key generation capabilities can be preconfigured in both the terminal and the network element.

S302. The network element determines a selected key generation capability based on the first key generation capability combination and priorities corresponding to key generation capabilities.

S303. The network element sends an authentication vector (Authentication vector, AV for short) request (AV request) to a server, where the AV request may include the first key generation capability combination and the selected key generation capability.

The first key generation capability combination may be indicated by an identifier of at least one key generation capability, or may be indicated by an indicator that is distributed by using a key generation capability. This is not limited herein.

S304. The server generates an AV response based on the AV request. The AV response includes an authentication vector, the authentication vector includes to-be-authenticated information, and the to-be-authenticated information includes a to-be-authenticated selected key generation capability and a second key generation capability combination. The to-be-authenticated selected key generation capability is added by the server to the to-be-authenticated information based on the selected key generation capability that is received, and may be the same as the selected key generation capability sent by the network element or may be different from the selected key generation capability because of tampering.

Optionally, the to-be-authenticated information is an authentication management field (Authentication Management Field, AMF for short), and the server writes the second key generation capability combination and the to-be-authenticated selected key generation capability into the AMF. Specifically, one or more bits in the AMF may be occupied, depending on an actual priority of a key generation capability. This is not limited herein.

S305. The server sends the AV response to the network element.

The authentication vector in the AV response carries the AMF (including the second key generation capability combination and the to-be-authenticated selected key generation capability), and may further include a message authentication code (Message authentication code, MAC for short), an access security management entity (access security management entity, ASME for short) key (marked as *K_{ASME}*), an expected response (Expected response, XRES for short), a random number (Random number, RAND for short), a sequence number (SQN), and the like.

It should be noted that the ASME key *K_{ASME}* may be generated by the server.

S306. The network element generates a second key parameter based on the selected key generation capability. The selected key generation capability herein is the selected key generation capability determined by the network element.

It should be noted that S306 may be performed between S302 and S303. This is not limited herein.

S307. The network element sends an authentication request to the terminal, where the authentication request includes an AMF and the second key parameter. The AMF includes the second key generation capability combination and the to-be-authenticated selected key generation capability.

Optionally, the network element may add content in the authentication vector except *K_{ASME}* and the XRES to the authentication request, and then send the authentication request to the terminal. In other words, the terminal receives both the second key generation capability combination and the to-be-authenticated selected key generation capability in the authentication vector.

Optionally, the network element may also send the selected key generation capability selected by the network element to the terminal.

S308. If determining, through authentication, that the second key generation capability combination in the AMF is the same as the first key generation capability combination, the terminal generates a first key parameter based on the selected key generation capability, and generates a first base key based on the first key parameter and the second key parameter.

Optionally, before generating the first key parameter, the terminal further performs authentication to determine whether the to-be-authenticated selected key generation capability in the AMF is the same as the selected key generation capability that is determined by the network element and that is received from the network element; and generates the first key parameter after an authentication result indicates yes.

The terminal first generates the first key parameter based on the selected key generation capability, and then generates the first base key based on the first key parameter and the second key parameter.

S309. The terminal sends an authentication response to the network element, where the authentication response includes the first key parameter.

The authentication response may further include a RES.

S310. The network element generates the first base key (marked as *K_{DH}*) based on the first key parameter and the second key parameter.

The network element may first perform authentication to determine whether the RES in the authentication response is the same as the XRES; and if the RES is the same as the XRES, the authentication succeeds.

S311. Both the terminal and the network element generate a non-access stratum key based on the first base key.

Specifically, the terminal and the network element may generate the non-access stratum key based on the first base key and another parameter, for example, generate the non-access stratum key based on the generated non-access stratum key and *K_{ASME}*.

The non-access stratum key may include a non-access stratum encryption key and a non-access stratum integrity key.

S312. The network element sends a non-access stratum (Non-Access Stratum, NAS for short) security mode command (Security mode command, SMC for short) to the terminal, where the NAS SMC may include a selected encryption algorithm and a selected integrity algorithm.

The selected encryption algorithm is an encryption algorithm selected by the network element from a plurality of preset encryption algorithms, and the selected integrity algorithm is an integrity algorithm selected by the network element from a plurality of preset integrity algorithms.

Optionally, integrity protection may be performed on the NAS SMC by using the non-access stratum integrity key and the selected integrity algorithm.

S313. The terminal sends a NAS security mode command complete (Security mode command complete, SMC for short) response to the network element, where encryption and integrity protection are performed on the NAS SMC response by using the non-access stratum key, the selected encryption algorithm, and the selected integrity algorithm.

Optionally, the integrity protection has been performed on the NAS SMC, and the terminal further needs to perform integrity authentication.

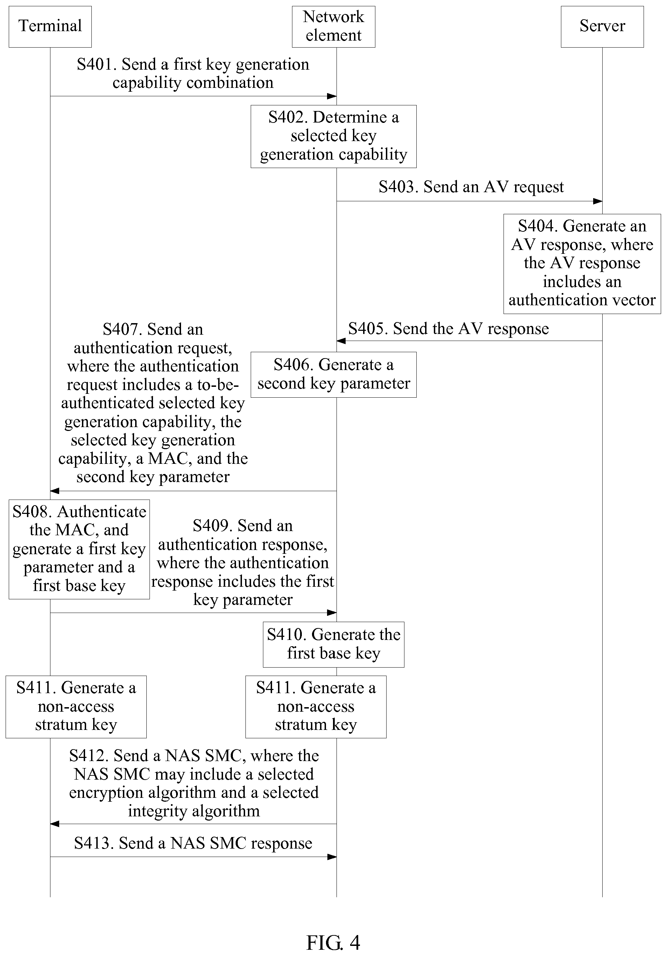

FIG. 4 is a schematic flowchart of another key obtaining method according to an embodiment of the present invention. As shown in FIG. 4, the method includes the following steps.

S401. A terminal sends a first key generation capability combination to a network element.

Optionally, the terminal sends an attach (attach) request message, where the attach request message includes the first key generation capability combination.

Optionally, the attach request message may further include an identifier of the terminal, a security capability of the terminal, and the like. The identifier of the terminal may be an IMSI of the terminal.

The security capability of the terminal may include an encryption algorithm and/or an integrity algorithm.

The first key generation capability combination may be indicated by an identifier of at least one key generation capability, that is, the attach request message directly carries the identifier of the key generation capability included in the first key generation capability combination; or may be indicated by an indicator that is distributed by using a key generation capability, where the indicator that is distributed by using the key generation capability may be specifically used to indicate the key generation capability used by the terminal, for example, indicate a D-H capability used by the terminal.

S402. The network element determines a selected key generation capability based on the first key generation capability combination and priorities corresponding to key generation capabilities.

S403. The network element sends an AV request to a server, where the AV request may include the first key generation capability combination, the selected key generation capability, and an identifier of the terminal.

S404. The server generates an AV response based on the AV request.

The AV response includes an authentication vector, the authentication vector includes to-be-authenticated information, and the to-be-authenticated information includes a to-be-authenticated selected key generation capability and a second key generation capability combination. The to-be-authenticated selected key generation capability is added by the server to a parameter in the authentication vector based on the selected key generation capability that is received, and may be the same as the selected key generation capability sent by the network element or may be different from the selected key generation capability because of tampering.

Optionally, the to-be-authenticated information is a MAC, and the server obtains the MAC through calculation based on the first key generation capability combination, and adds the MAC to the AV response. The to-be-authenticated selected key generation capability and the second key generation capability combination are used as input parameters to generate the MAC through calculation.

S405. The server sends the AV response to the network element.

The authentication vector in the AV response carries the MAC and the to-be-authenticated selected key generation capability, and may further include an AMF, an ASME key, an XRES, a RAND, an SQN, and the like. This is not limited herein.

S406. The network element generates a second key parameter based on the selected key generation capability. The selected key generation capability herein is the selected key generation capability determined by the network element.

S407. The network element sends an authentication request to the terminal, where the authentication request includes the to-be-authenticated selected key generation capability, the selected key generation capability, a MAC, and the second key parameter.

Optionally, the network element may add content in the authentication vector except *K_{ASME}* and the XRES to the authentication request, and then send the authentication request to the terminal. The authentication request may further include the AMF, a RES, and the like.

S408. The terminal obtains an XMAC through calculation based on the first key generation capability combination and the selected key generation capability; performs authentication to determine whether the XMAC is the same as the MAC in the authentication request; and if the XMAC is the same as the MAC, generates a first key parameter based on the selected key generation capability, and generates a first base key based on the first key parameter and the second key parameter.

Optionally, before generating the first key parameter, the terminal further performs authentication to determine whether the to-be-authenticated selected key generation capability is the same as the selected key generation capability that is determined by the network element and that is received from the network element; and generates the first key parameter after an authentication result indicates yes.

S409. The terminal sends an authentication response to the network element, where the authentication response includes the first key parameter.

The authentication response may further include the RES.

S410. The network element generates the first base key based on the first key parameter and the second key parameter.

The network element may first perform authentication to determine whether the RES in the authentication response is the same as the XRES; and if the RES is the same as the XRES, the authentication succeeds.

S411. Both the terminal and the network element generate a non-access stratum key based on the first base key.

Specifically, the terminal and the network element may generate the non-access stratum key based on the first base key and another parameter, for example, generate the non-access stratum key based on the generated non-access stratum key and *K_{ASME}* .

S412. The network element sends a NAS SMC to the terminal, where the NAS SMC may include a selected encryption algorithm and a selected integrity algorithm.

Optionally, integrity protection may be performed on the NAS SMC by using the non-access stratum key and the selected integrity algorithm.

S413. The terminal sends a NAS SMC response to the network element, where encryption and integrity protection are performed on the NAS SMC response by using the non-access stratum key, the selected encryption algorithm, and the selected integrity algorithm.

Optionally, the integrity protection has been performed on the NAS SMC, and the terminal further needs to perform integrity authentication.

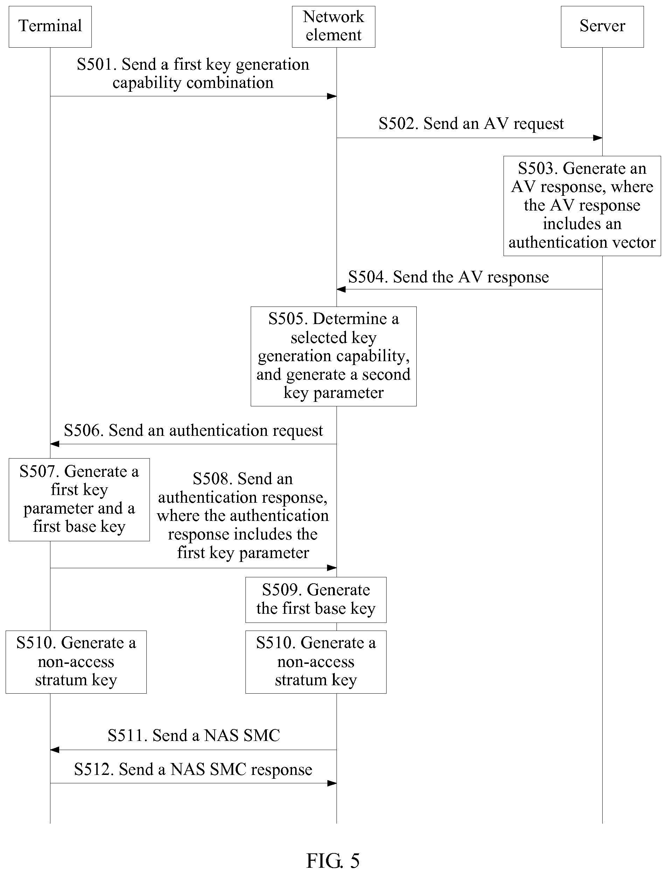

FIG. 5 is a schematic flowchart of another key obtaining method according to an embodiment of the present invention. As shown in FIG. 5, the method includes the following steps.

S501. A terminal sends an attach request message to a network element, where the attach request message includes a first key generation capability combination.

Optionally, the attach request message may further include an identifier of the terminal, a security capability of the terminal, and the like. The identifier of the terminal may be an IMSI of the terminal.

The security capability of the terminal may include an encryption algorithm and/or an integrity algorithm.

The first key generation capability combination may be indicated by an identifier of at least one key generation capability, that is, the attach request message directly carries the identifier of the key generation capability included in the first key generation capability combination; or may be indicated by an indicator that is distributed by using a key generation capability, where the indicator that is distributed by using the key generation capability may be specifically used to indicate the key generation capability used by the terminal, for example, indicate a D-H capability used by the terminal.

S502. The network element sends an AV request to a server, where the AV request may include an identifier of the terminal.

A difference between the embodiments in FIG. 3 and FIG. 4 and this embodiment lies in that, in this embodiment, the network element no longer reports the first key generation capability combination and a selected security capability to the server.

S503. The server generates an AV response based on the AV request, where the AV response includes an authentication vector.

The authentication vector may include an AMF, a MAC, an ASME key, an XRES, a RAND, an SQN, and the like. This is not limited herein.

S504. The server sends the AV response to the network element.

S505. The network element determines a selected key generation capability based on the first key generation capability combination and priorities corresponding to key generation capabilities, and generates a second key parameter.

S506. The network element sends an authentication request to the terminal, where the authentication request is an authentication request on which integrity protection has been performed, and the authentication request includes the selected key generation capability and the second key parameter.

Integrity protection may be performed on the authentication request by using *K_{ASME}*.

The authentication request may further include any one or combination of the following: a second key generation capability combination.

In this embodiment, in addition to sending the selected key generation capability that is determined to the terminal, the network element may send, to the terminal, at least one key generation capability that is supported by the terminal and that is recorded on the network element side. The terminal may perform parsing to check, based on the authentication request, whether the security capability and the key generation capability have been tampered with.

S507. The terminal generates a first key parameter based on the selected key generation capability, and generates a first base key based on the first key parameter and the second key parameter.

It should be noted that the terminal may first authenticate the AMF and the MAC in the authentication request.

After the authentication performed on the AMF and the MAC succeeds, the terminal may perform integrity protection authentication based on *K_{ASME}*. After the authentication succeeds, that is, the authentication request has not been tampered with, the terminal generates the first key parameter based on the selected key generation capability, and generates the base key based on the first key parameter and the second key parameter.

S508. The terminal sends an authentication response to the network element, where the authentication response includes the first key parameter.

The authentication response may further include a RES.

S509. The network element generates the first base key based on the first key parameter and the second key parameter.

The network element may first perform authentication to determine whether the RES in the authentication response is the same as the XRES; and if the RES is the same as the XRES, the authentication succeeds.

5510. Both the terminal and the network element generate a non-access stratum key based on the first base key.

Specifically, the terminal and the network element may generate the non-access stratum key based on the first base key and another parameter, for example, generate the non-access stratum key based on the generated non-access stratum key and *K_{ASME}*.

S511. The network element sends a NAS SMC to the terminal, where encryption and integrity protection are performed on the NAS SMC by using the non-access stratum key.

Optionally, if a selected encryption algorithm is transmitted in S508, encryption protection may be performed in S511. If no encryption algorithm is transmitted in S508, in S511, only integrity protection is performed, and an encryption algorithm is transmitted.

Specifically, encryption and integrity protection are performed on the NAS SMC by using the non-access stratum key, the selected integrity algorithm, and the selected encryption algorithm.

S512. The terminal sends a NAS SMC response to the network element, where encryption and integrity protection are performed on the NAS SMC response by using the non-access stratum key.

Specifically, encryption and integrity protection are performed on the NAS SMC response by using the non-access stratum key, the selected integrity algorithm, and the selected encryption algorithm.

It should be noted that if the authentication request in S506 carries the selected integrity algorithm and the selected encryption algorithm, the NAS SMC in S511 may be an empty message or there is no NAS SMC process, and encryption and integrity protection are performed only by using the non-access stratum key. If the authentication request in S506 includes only the selected integrity algorithm, the NAS SMC in S511 needs to carry the encryption algorithm. If the authentication request in S506 includes only the selected encryption algorithm, the NAS SMC in S511 needs to carry the integrity algorithm.

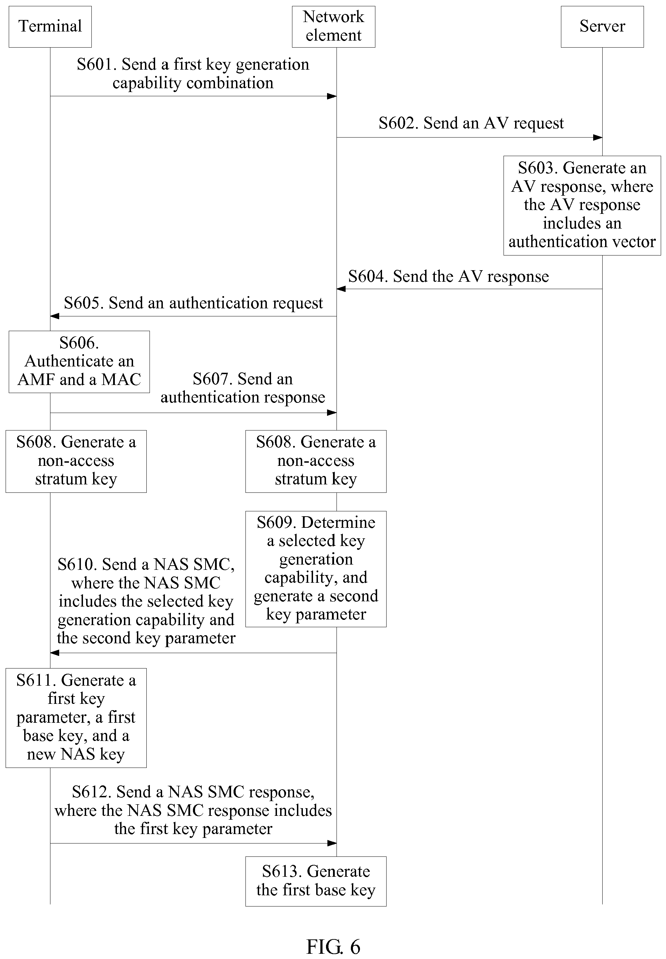

FIG. 6 is a schematic flowchart of another key obtaining method according to an embodiment of the present invention. As shown in FIG. 6, the method includes the following steps.

S601. A terminal sends an attach request message to a network element, where the attach request message includes a first key generation capability combination.

Optionally, the attach request message may further include an identifier of the terminal, a security capability of the terminal, and the like. The identifier of the terminal may be an IMSI of the terminal.

The security capability of the terminal may include an encryption algorithm and/or an integrity algorithm.

The first key generation capability combination may be indicated by an identifier of at least one key generation capability, that is, the attach request message directly carries the identifier of the key generation capability included in the first key generation capability combination; or may be indicated by an indicator that is distributed by using a key generation capability, where the indicator that is distributed by using the key generation capability may be specifically used to indicate the key generation capability used by the terminal, for example, indicate a D-H capability used by the terminal.

S602. The network element sends an AV request to a server, where the AV request may include an identifier of the terminal.

S603. The server generates an AV response based on the AV request, where the AV response includes an authentication vector.

The authentication vector may include an AMF, a MAC, an ASME key, an XRES, a RAND, an SQN, and the like. This is not limited herein.

S604. The server sends the AV response to the network element.

The network element retains the ASME key and the XRES in the authentication vector, and sends the rest of content to the terminal by using an authentication request.

S605. The network element sends an authentication request to the terminal, where the authentication request includes an AMF and a MAC.

S606. The terminal authenticates the AMF and the MAC in the authentication request. Specifically, the terminal determines a bit value of a specific bit in the AMF, obtains an XMAC through calculation based on the first key generation capability combination, and performs authentication to determine whether the XMAC is the same as the MAC in the authentication request. This is not limited herein.

S607. The terminal sends an authentication response to the network element, where the authentication response includes a response (response, RES for short).

S608. The network element performs authentication to determine whether the RES is the same as the XRES, and the network element and the terminal generate a non-access stratum key.

Specifically, the NAS key may be generated based on the ASME key.

S609. The network element determines a selected key generation capability based on the first key generation capability combination and priorities corresponding to key generation capabilities, and generates a second key parameter based on the selected key generation capability.

S610. The network element sends a NAS SMC to the terminal, where integrity protection is performed on the NAS SMC by using the non-access stratum key, and the NAS SMC includes the selected key generation capability and the second key parameter.

Specifically, integrity protection is performed on the NAS SMC by using a non-access stratum integrity key.

S611. The terminal authenticates integrity of the NAS SMC, generates a first key parameter after the authentication succeeds, generates a first base key based on the first key parameter and the second key parameter, and generates a new NAS key based on the base key.

Optionally, the NAS SMC may further carry the security capability of the terminal and at least one key generation capability of the terminal.

Authenticating the integrity of the NAS SMC is mainly authenticating integrity of the security capability of the terminal and the at least one key generation capability of the terminal.

S612. The terminal sends a NAS SMC response to the network element, where integrity protection is performed on the NAS SMC response by using the new NAS, and the NAS SMC response includes the first key parameter. However, no limitation is imposed thereto, and integrity protection may alternatively be performed by using the original NAS key.

S613. The network element generates the first base key based on the first key parameter and the second key parameter.

The network element authenticates integrity of the NAS SMC response by using the new NAS key.

It should be noted that encryption and integrity protection performed on a non-access stratum are mainly described in the embodiments shown in FIG. 2 to FIG. 6, on such a basis, access stratum encryption and integrity protection also need to be started for an access stratum.

It should be noted that a key generation initiator may be the terminal or the network element. In the foregoing embodiments, the network element is the initiator, the second key parameter may be used as a key material generated by the initiator (KE-Key i-initiator, KEi for short), and the first key parameter may be used as a key material generated by a responder (KE-Key r-Response, KEr for short). Reversely, the network element may alternatively be a responder. This is not limited herein.

Optionally, in the foregoing embodiments, the generating, by the server, a MAC may be: generating, by the server, the MAC based on a key derivation function (KDF) by using a long-term key (Ki), the AMF, the SQN, the first key generation capability combination, and the selected key generation capability.

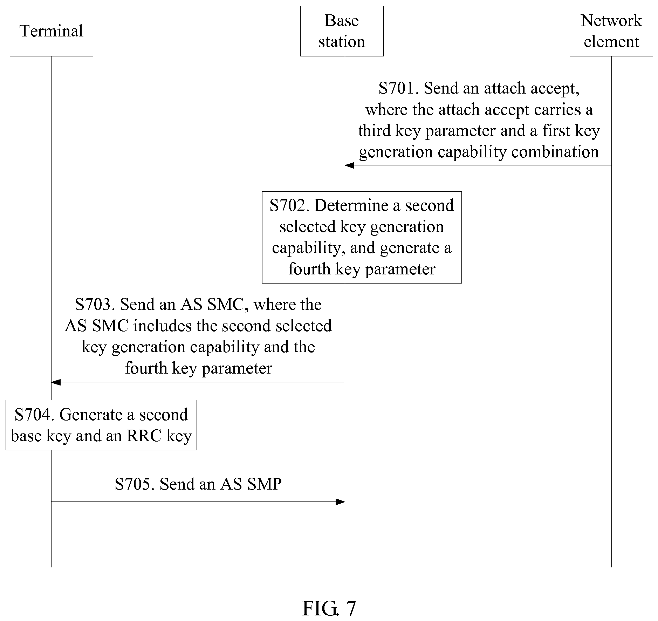

FIG. 7 is a schematic flowchart of another key obtaining method according to an embodiment of the present invention.

Based on the foregoing embodiments, before sending the NAS SMC response to the network element, the terminal may generate a third key parameter based on the first key generation capability combination, and send the third key parameter to the network element by using the NAS SMC response.

As shown in FIG. 7, the method includes the following steps.

S701. The network element sends an attach accept (attach accept) to a base station, where the attach accept carries the third key parameter and the first key generation capability combination.

Optionally, the attach accept may further carry a derivative key (marked as a KeNB).

S702. The base station determines a second selected key generation capability based on the first key generation capability combination and priorities corresponding to key generation capabilities, and generates a fourth key parameter based on the second selected key generation capability.

The priorities corresponding to the key generation capabilities are also preset in the base station, and may be the same as or different from the priorities corresponding to the key generation capabilities preset in the network element.

In this embodiment, the selected key generation capability determined by the network element is referred to as a first selected key generation capability, and the selected key generation capability determined by the base station is referred to as the second selected key generation capability.

Optionally, the base station may further generate a second base key based on the third key parameter and the fourth key parameter, and may further generate a Radio Resource Control (Radio resource control, RRC for short) key based on the second base key.

S703. The base station sends an access stratum (Access Stratum, AS for short) SMC to the terminal, where the AS SMC includes the second selected key generation capability and the fourth key parameter.

Optionally, integrity protection is performed on the AS SMC by using the RRC key.

S704. The terminal generates a second base key based on the third key parameter and the fourth key parameter, and generates a new RRC key based on the second base key.

Optionally, if the integrity protection has been performed on the AS SMC, the terminal further needs to authenticate integrity of the AS SMC. If the authentication succeeds, S705 is performed.

S705. The terminal sends an AS SMP to the base station, where integrity protection is performed on the AS SMP by using the new RRC key.

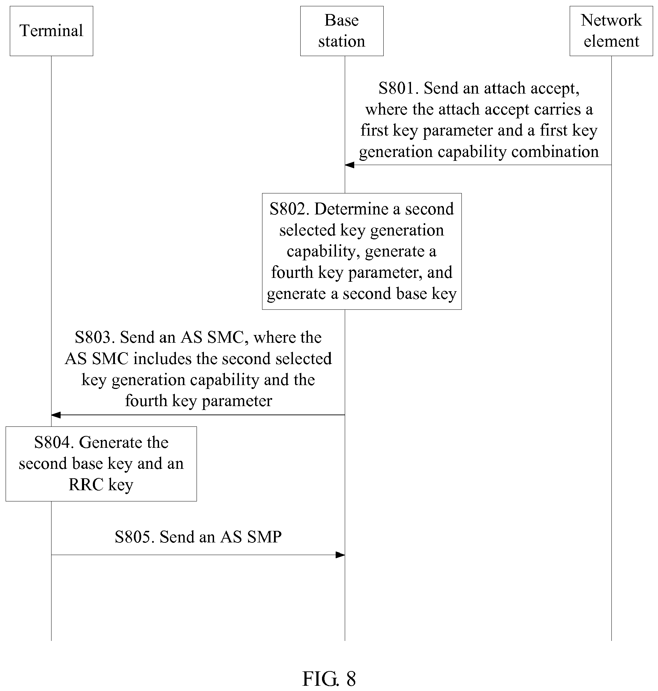

FIG. 8 is a schematic flowchart of another key obtaining method according to an embodiment of the present invention. In this embodiment, a terminal no longer generates a third key parameter, and continues to use the first key parameter. As shown in FIG. 8, the method includes the following steps.

S801. A network element sends an attach accept to a base station, where the attach accept carries the first key parameter and the first key generation capability combination.

Optionally, the attach accept may further carry a derivative key (marked as a KeNB).

S802. The base station determines a second selected key generation capability based on the first key generation capability combination and priorities corresponding to key generation capabilities, generates a fourth key parameter based on the second selected key generation capability, and generates a second base key based on the first key parameter and the fourth key parameter.

Optionally, the base station may further generate an RRC key, and specifically, may generate the RRC key by using the second base key.

S803. The base station sends an AS SMC to the terminal, where the AS SMC includes the second selected key generation capability and the fourth key parameter.

Optionally, integrity protection is performed on the AS SMC by using the RRC key.

S804. The terminal generates the second base key based on the first key parameter and the fourth key parameter.

Optionally, if the integrity protection has been performed on the AS SMC, the terminal further needs to authenticate integrity of the AS SMC. If the authentication succeeds, S805 is performed.

Optionally, the terminal generates the RRC key based on the second base key, and may further generate another key. This is not limited herein.

S805. The terminal sends an AS SMP to the base station, where integrity protection may be performed on the AS SMP by using the RRC key or another key.

Optionally, the terminal sends the AS SMP to the base station after authenticating the integrity of the AS SMC.

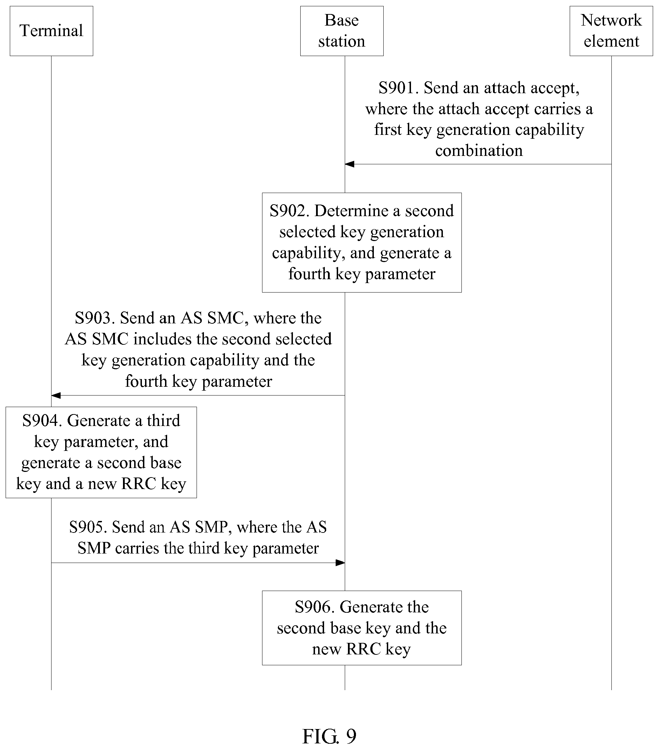

FIG. 9 is a schematic flowchart of another key obtaining method according to an embodiment of the present invention. As shown in FIG. 9, the method includes the following steps.

S901. A network element sends an attach accept to a base station, where the attach accept carries the first key generation capability combination.

Optionally, the attach accept may further carry a derivative key (marked as a KeNB).

S902. The base station determines a second selected key generation capability based on the first key generation capability combination and priorities corresponding to key generation capabilities, and generates a fourth key parameter based on the second selected key generation capability.

Optionally, the base station may further generate an RRC key, and specifically, may generate the RRC key by using the KeNB.

S903. The base station sends an AS SMC to a terminal, where the AS SMC includes the second selected key generation capability and the fourth key parameter.

Integrity protection may be performed on the AS SMC by using the RRC key.

S904. The terminal generates a third key parameter based on the second selected key generation capability, generates a second base key based on the third key parameter and the fourth key parameter, and generates a new RRC key based on the second base key.

S905. The terminal sends an AS SMP to the base station, where the AS SMP carries the third key parameter.

Integrity protection may be performed on the AS SMP by using the new RRC key.

S906. The base station generates the second base key based on the third key parameter and the fourth key parameter, and generates the new RRC key based on the second base key.

Optionally, the base station authenticates integrity of the AS SMP.

The existing KeNB may be generated by using *K_{ASME}.*

Optionally, in a manner, the KeNB in this embodiment may be generated as follows: The network element generates an original KeNB by using *K_{ASME},* and then generates the KeNB based on a key derivation function (KDF) by using the original KeNB, a non-access stratum key, and the selected key generation capability.

In another manner, the KeNB in this embodiment may be generated by the network element based on the key derivation function by using the non-access stratum key and the selected key generation capability. To better optimize a KeNB, the KeNB generated by the network element by using the non-access stratum key and the selected key generation capability may be used as an original KeNB, and then the KeNB is generated by using the foregoing method, that is, generated based on the key derivation function by using the original KeNB, the non-access stratum key, and the selected key generation capability.

Optionally, the access stratum key may include any one or more of an access stratum encryption key, an access stratum integrity key, a user plane encryption key, a user plane integrity key, and the like. This is not limited herein.

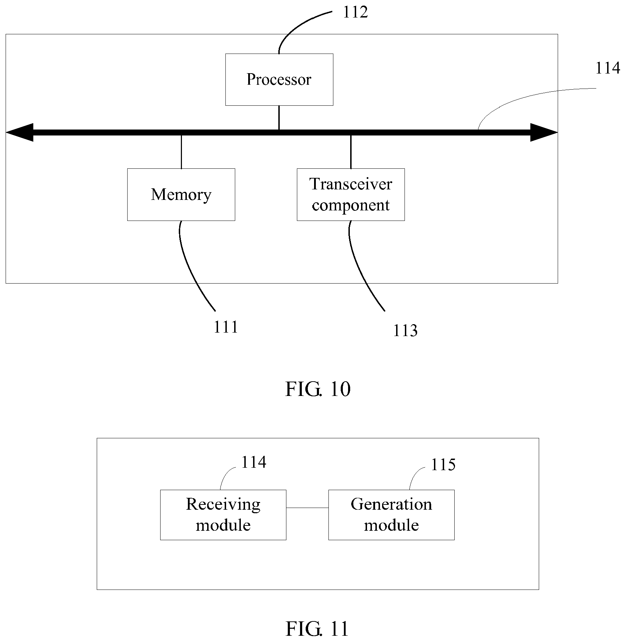

FIG. 10 is a schematic structural diagram of a key obtaining apparatus according to an embodiment of the present invention. As shown in FIG. 10, the apparatus includes a memory 111 and a processor 112, and may further include a transceiver component 113. The memory 111, the processor 112, and the transceiver component 113 may be connected by using a bus 114. However, no limitation is imposed thereto, and the apparatus may alternatively be of a star structure.

The memory 111 is configured to store a program, and the processor 112 is configured to invoke the program in the memory 111 to perform the foregoing method. When the processor 112 performs the method, the transceiver component 113 may be configured to exchange information with another apparatus.

The apparatus may be located in a terminal, and details are as follows.

The processor 112 is configured to: receive a selected key generation capability from a network element, where the selected key generation capability is used to indicate a key generation capability that is determined by the network element based on a first key generation capability combination, and the first key generation capability combination includes at least one key generation capability of the terminal; and generate a first key parameter and a first base key based on the selected key generation capability.

Optionally, the processor 112 is further configured to send the first key generation capability combination to the network element.

Optionally, the processor 112 is further configured to: receive to-be-authenticated information from the network element, where the to-be-authenticated information includes a second key generation capability combination, and the second key generation capability combination includes at least one key generation capability; and parse the to-be-authenticated information, and determine whether the second key generation capability combination included in the to-be-authenticated information is the same as the first key generation capability combination.

Optionally, the to-be-authenticated information is an authentication management field AMF, and the processor 112 is specifically configured to: parse the AMF, and determine whether the second key generation capability combination included in the AMF is the same as the first key generation capability combination.

Optionally, the to-be-authenticated information is a message authentication code MAC, and the MAC is generated by a server through calculation based on the first key generation capability combination; and the processor 112 is specifically configured to: obtain an expected message authentication code XMAC through calculation based on the first key generation capability combination; and determine, for the terminal, that the second key generation capability combination is the same as the first key generation capability combination when the terminal determines that the XMAC is the same as the MAC.

Optionally, the processor 112 is specifically configured to receive an authentication request sent by the network element, where the authentication request includes the selected key generation capability.

Optionally, the authentication request further includes any one or combination of the following: a security capability of the terminal, the second key generation capability combination, a selected integrity algorithm, and a selected encryption algorithm.

Optionally, the authentication request is an authentication request on which integrity protection has been performed.

The processor 112 is specifically configured to generate the first key parameter and the first base key after determining that the second key generation capability combination included in the to-be-authenticated information is the same as the first key generation capability combination.

Optionally, the processor 112 is specifically configured to receive a non-access stratum security mode command from the network element, where the non-access stratum security mode command includes the selected key generation capability.

Optionally, the processor 112 is specifically configured to: authenticate integrity of the non-access stratum security mode command based on the non-access stratum security mode command; generate the first key parameter based on the selected key generation capability after the authentication performed on the integrity of the non-access stratum security mode command succeeds; and generate the first base key based on the first key parameter and the second key parameter.

Optionally, the processor 112 is further configured to generate a non-access stratum key based on the first base key, where the non-access stratum key includes a non-access stratum encryption key and a non-access stratum integrity key.

Optionally, the processor 112 is specifically configured to: generate a non-access stratum security mode complete command, where the non-access stratum security mode complete command carries the first key parameter; perform integrity protection on the non-access stratum security mode complete command by using the non-access stratum integrity key; and send, to the network element, the non-access stratum security mode complete command on which the integrity protection has been performed.

The apparatus shown in FIG. 10 may alternatively be located in a network element, and details are as follows.

The processor 112 is configured to: determine a selected key generation capability based on a first key generation capability combination, where the first key generation capability combination includes at least one key generation capability of a terminal; send the selected key generation capability to the terminal; and receive a first key parameter sent by the terminal, where the first key parameter is generated by the terminal based on the selected key generation capability.

Optionally, the processor 112 is further configured to receive the first key generation capability combination sent by the terminal.

Optionally, the processor 112 is specifically configured to send an authentication request to the terminal, where the authentication request includes the selected key generation capability.

Optionally, the authentication request further includes any one or combination of the following: a security capability of the terminal, the second key generation capability combination, a selected integrity algorithm, and a selected encryption algorithm.

The apparatus shown in FIG. 10 may alternatively be located in a base station, and details are as follows.

The processor 112 is configured to: obtain a selected key generation capability, where the selected key generation capability is determined based on a first key generation capability combination; generate a fourth key parameter based on the selected key generation capability; and send the fourth key parameter to the terminal.

Optionally, the processor 112 is further configured to: receive a first key parameter sent by the network element; and generate an access stratum key based on the first key parameter and the fourth key parameter.

Optionally, the processor 112 is further configured to: receive a third key parameter sent by the terminal, where the third key parameter is generated based on the first key generation capability combination; and generate an access stratum key based on the third key parameter and the fourth key parameter.

It should be noted that the processor may perform receiving and sending actions by using the transceiver component 113.

The apparatus may be applied to the method embodiment performed by the terminal, and implementation principles and technical effects thereof are similar to those in the method embodiment. For related content, refer to the method embodiment. Details are not described herein again.

FIG. 11 is a schematic structural diagram of another key obtaining apparatus according to an embodiment of the present invention. The apparatus may be located in a terminal. As shown in FIG. 11, the apparatus includes a receiving module 114 and a generation module 115.

The receiving module 114 is configured to receive a selected key generation capability from a network element.

The generation module 115 is configured to generate a first key parameter and a first base key based on the selected key generation capability.

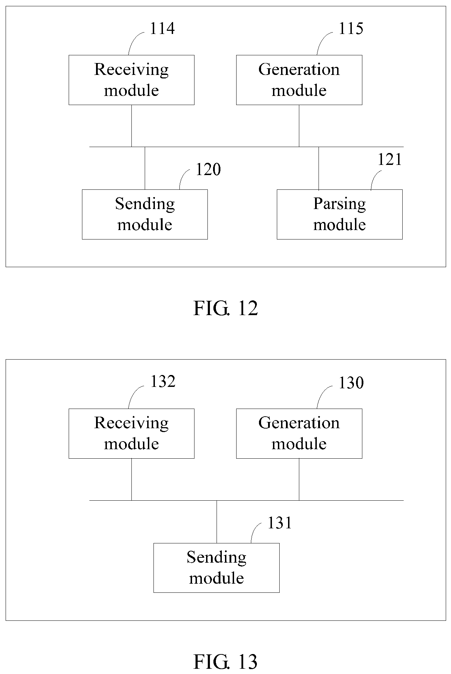

FIG. 12 is a schematic structural diagram of another key obtaining apparatus according to an embodiment of the present invention. Based on FIG. 11, the apparatus may include a sending module 120, configured to send the first key generation capability combination to the network element.

Optionally, the receiving module 114 is further configured to receive to-be-authenticated information from the network element, where the to-be-authenticated information includes a second key generation capability combination, and the second key generation capability combination includes at least one key generation capability.

Referring to FIG. 12, the apparatus further includes a parsing module 121, configured to: parse the to-be-authenticated information, and determine whether the second key generation capability combination included in the to-be-authenticated information is the same as the first key generation capability combination.

Optionally, the receiving module 114 is specifically configured to receive an authentication request sent by the network element, where the authentication request includes the selected key generation capability.

The authentication request further includes any one or combination of the following: a security capability of the terminal, the second key generation capability combination, a selected integrity algorithm, and a selected encryption algorithm.

The generation module 115 is specifically configured to generate the first key parameter and the first base key after determining that the second key generation capability combination included in the to-be-authenticated information is the same as the first key generation capability combination.

Optionally, the receiving module 114 is specifically configured to receive a non-access stratum security mode command from the network element, where the non-access stratum security mode command includes the selected key generation capability.

The non-access stratum security mode command further includes a second key parameter, a second key generation capability combination, a security capability of the terminal, a selected integrity algorithm, and a selected encryption algorithm, and the second key parameter is a key parameter generated by the network element based on the selected key generation capability.

Correspondingly, the generation module 115 is specifically configured to: authenticate integrity of the non-access stratum security mode command based on the non-access stratum security mode command; generate the first key parameter based on the selected key generation capability after the authentication performed on the integrity of the non-access stratum security mode command succeeds; and generate the first base key based on the first key parameter and the second key parameter.

Optionally, the generation module 115 is further configured to generate a non-access stratum key based on the first base key, where the non-access stratum key includes a non-access stratum encryption key and a non-access stratum integrity key.

Further, the generation module 115 generates a non-access stratum security mode complete command, where the non-access stratum security mode complete command carries the first key parameter; and performs integrity protection on the non-access stratum security mode complete command by using the non-access stratum integrity key.

The sending module 120 sends, to the network element, the non-access stratum security mode complete command on which the integrity protection has been performed.

The apparatus may be applied to the method embodiment performed by the base station, and implementation principles and technical effects thereof are similar to those in the method embodiment. For related content, refer to the method embodiment. Details are not described herein again.

FIG. 13 is a schematic structural diagram of another key obtaining apparatus according to an embodiment of the present invention. The apparatus may be located in a network element. The apparatus includes a generation module 130, a sending module 131, and a receiving module 132.

The generation module 130 is configured to determine a selected key generation capability based on a first key generation capability combination, where the first key generation capability combination includes at least one key generation capability of a terminal.

The sending module 131 is configured to send the selected key generation capability to the terminal.

The receiving module 132 is configured to receive a first key parameter sent by the terminal, where the first key parameter is generated by the terminal based on the selected key generation capability.

Optionally, the receiving module 132 is further configured to receive the first key generation capability combination sent by the terminal.

Optionally, the sending module 131 is specifically configured to send an authentication request to the terminal, where the authentication request includes the selected key generation capability.

Optionally, the authentication request further includes any one or combination of the following: a security capability of the terminal, a second key generation capability combination, a selected integrity algorithm, and a selected encryption algorithm.

The apparatus may be applied to the method embodiment performed by the base station, and implementation principles and technical effects thereof are similar to those in the method embodiment. For related content, refer to the method embodiment. Details are not described herein again.

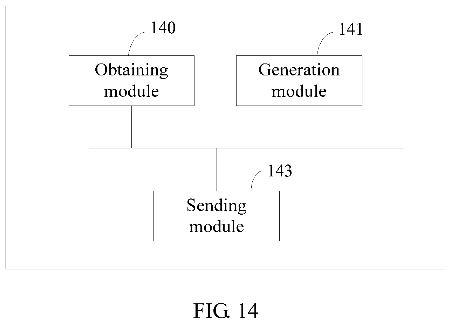

FIG. 14 is a schematic structural diagram of another key obtaining apparatus according to an embodiment of the present invention. The apparatus may be located in a base station. As shown in FIG. 14, the apparatus includes an obtaining module 140, a generation module 141, and a sending module 143.

The obtaining module 140 obtains a selected key generation capability, where the selected key generation capability is determined based on a first key generation capability combination.

The generation module 141 generates a fourth key parameter based on the selected key generation capability.

The sending module 143 sends the fourth key parameter to the terminal.

Referring to FIG. 14, the apparatus may further include a receiving module 144, configured to receive a first key parameter sent by the network element. Correspondingly, the generation module 141 generates an access stratum key based on the first key parameter and the fourth key parameter.

Further, the receiving module 144 may further receive a third key parameter sent by the terminal, where the third key parameter is generated based on the first key generation capability combination.

Correspondingly, the generation module 141 generates an access stratum key based on the third key parameter and the fourth key parameter.

The apparatus may be applied to the method embodiment performed by the base station, and implementation principles and technical effects thereof are similar to those in the method embodiment. For related content, refer to the method embodiment. Details are not described herein again.

It should be noted that the module division of the apparatus is merely logical function division. In actual implementation, all or some of the modules may be integrated into one physical entity, or may be physically separated. In addition, all of the modules may be implemented by a processing component invoking software; or all of the modules may be implemented by hardware; or some of the modules may be implemented by a processing component invoking software, and some of the modules may be implemented by hardware. For example, the generation module may be an independent processing component; or may be integrated into a chip of the apparatus. Alternatively, the generation module may be stored in a memory of the apparatus in a form of program code, and a function of the generation module is invoked and performed by a processing component of the apparatus. Implementations of other modules are similar. Moreover, all or some of the modules may be integrated, or may be independently implemented. The processing component herein may be an integrated circuit with a signal processing capability. In an implementation process, steps in the foregoing methods or the foregoing modules can be implemented by using a hardware integrated logic circuit in the processing component or by using instructions in a form of software.

For example, the modules may be configured as one or more integrated circuits to implement the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA). For another example, when one of the modules is implemented by invoking program code by the processing component, the processing component may be a general-purpose processor, such as a central processing unit (Central Processing Unit, CPU for short), or another processor that can invoke program code. For still another example, the modules may be integrated, and implemented in a form of a system-on-a-chip (system-on-a-chip, SOC for short).

Finally, it should be noted that the foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A key obtaining method, comprising:
receiving, by a terminal, a selected key generation capability from a network element, wherein the selected key generation capability is used to indicate a key generation capability that is determined by the network element based on a first key generation capability combination, and the first key generation capability combination comprises at least one key generation capability of the terminal; and
generating, by the terminal, a first key parameter and a first base key based on the selected key generation capability.

2. The method according to claim 1, before the receiving, by a terminal, a selected key generation capability sent by a network element, further comprising:
sending, by the terminal, the first key generation capability combination to the network element.

3. The method according to claim 2, wherein the method further comprises:
receiving, by the terminal, to-be-authenticated information from the network element, wherein the to-be-authenticated information comprises a second key generation capability combination, and the second key generation capability combination comprises at least one key generation capability; and
parsing, by the terminal, the to-be-authenticated information, and determining whether the second key generation capability combination comprised in the to-be-authenticated information is the same as the first key generation capability combination.

4. The method according to claim 3, wherein the to-be-authenticated information is an authentication management field AMF; and
the parsing, by the terminal, the to-be-authenticated information, and determining whether the second key generation capability combination comprised in the to-be-authenticated information is the same as the first key generation capability combination comprises:
parsing, by the terminal, the AMF, and determining whether the second key generation capability combination comprised in the AMF is the same as the first key generation capability combination.

5. The method according to claim 3, wherein the to-be-authenticated information is a message authentication code MAC, and the MAC is generated by a server through calculation based on the first key generation capability combination; and
the parsing, by the terminal, the to-be-authenticated information, and determining whether the second key generation capability combination comprised in the to-be-authenticated information is the same as the first key generation capability combination comprises:
obtaining, by the terminal, an expected message authentication code XMAC through calculation based on the first key generation capability combination; and
determining, by the terminal, that the second key generation capability combination is the same as the first key generation capability combination when the terminal determines that the XMAC is the same as the MAC.

6. The method according to any one of claims 1 to 5, wherein the receiving, by a terminal, a selected key generation capability from a network element comprises:
receiving, by the terminal, an authentication request sent by the network element, wherein the authentication request comprises the selected key generation capability.

7. The method according to claim 6, wherein the authentication request further comprises any one or combination of the following: a security capability of the terminal, the second key generation capability combination, a selected integrity algorithm, and a selected encryption algorithm.

8. The method according to claim 6 or 7, wherein the authentication request is an authentication request on which integrity protection has been performed.

9. The method according to any one of claims 3 to 8, wherein the generating, by the terminal, a first key parameter and a first base key based on the selected key generation capability comprises:
generating, by the terminal, the first key parameter and the first base key after determining that the second key generation capability combination comprised in the to-be-authenticated information is the same as the first key generation capability combination.

10. The method according to claim 1, wherein the receiving, by a terminal, a selected key generation capability sent by a network element comprises:
receiving, by the terminal, a non-access stratum security mode command from the network element, wherein the non-access stratum security mode command comprises the selected key generation capability.

11. The method according to claim 10, wherein the non-access stratum security mode command further comprises a second key parameter, a second key generation capability combination, a security capability of the terminal, a selected integrity algorithm, and a selected encryption algorithm, and the second key parameter is a key parameter generated by the network element based on the selected key generation capability; and
the generating, by the terminal, a first key parameter and a first base key based on the selected key generation capability comprises:
authenticating, by the terminal, integrity of the non-access stratum security mode command based on the non-access stratum security mode command;
generating, by the terminal, the first key parameter based on the selected key generation capability after the authentication performed on the integrity of the non-access stratum security mode command succeeds; and
generating, by the terminal, the first base key based on the first key parameter and the second key parameter.

12. The method according to claim 1, wherein after the generating, by the terminal, a first key parameter and a first base key based on the selected key generation capability, the method further comprises:
generating, by the terminal, a non-access stratum key based on the first base key, wherein the non-access stratum key comprises a non-access stratum encryption key and a non-access stratum integrity key.

13. The method according to claim 12, wherein the sending, by the terminal, the first key parameter to the network element comprises:
generating, by the terminal, a non-access stratum security mode complete command, wherein the non-access stratum security mode complete command carries the first key parameter;
performing, by the terminal, integrity protection on the non-access stratum security mode complete command by using the non-access stratum integrity key; and
sending, by the terminal to the network element, the non-access stratum security mode complete command on which the integrity protection has been performed.

14. A key obtaining method, comprising:
determining, by a network element, a selected key generation capability based on a first key generation capability combination, wherein the first key generation capability combination comprises at least one key generation capability of a terminal;
sending, by the network element, the selected key generation capability to the terminal; and
receiving, by the network element, a first key parameter sent by the terminal, wherein the first key parameter is generated by the terminal based on the selected key generation capability.

15. The method according to claim 14, before the determining, by a network element, a selected key generation capability based on a first key generation capability combination, further comprising:
receiving, by the network element, the first key generation capability combination sent by the terminal.

16. The method according to claim 14 or 15, wherein the sending, by the network element, the selected key generation capability to the terminal comprises:
sending, by the network element, an authentication request to the terminal, wherein the authentication request comprises the selected key generation capability.

17. The method according to claim 16, wherein the authentication request further comprises any one or combination of the following: a security capability of the terminal, a second key generation capability combination, a selected integrity algorithm, and a selected encryption algorithm.

18. A key obtaining method, comprising:
obtaining, by a base station, a selected key generation capability, wherein the selected key generation capability is determined based on a first key generation capability combination;
generating, by the base station, a fourth key parameter based on the selected key generation capability; and
sending, by the base station, the fourth key parameter to the terminal.

19. The method according to claim 18, further comprising:
receiving, by the base station, a first key parameter sent by the network element; and
generating, by the base station, an access stratum key based on the first key parameter and the fourth key parameter.

20. The method according to claim 18, further comprising:
receiving, by the base station, a third key parameter sent by the terminal, wherein the third key parameter is generated based on the first key generation capability combination; and
generating, by the base station, an access stratum key based on the third key parameter and the fourth key parameter.

21. A key obtaining apparatus, comprising a memory and a processor, wherein the memory is configured to store a program, and the processor is configured to invoke the program in the memory to perform the following method:
the processor is configured to: receive a selected key generation capability from a network element, wherein the selected key generation capability is used to indicate a key generation capability that is determined by the network element based on a first key generation capability combination, and the first key generation capability combination comprises at least one key generation capability of the terminal; and generate a first key parameter and a first base key based on the selected key generation capability.

22. The apparatus according to claim 21, wherein the processor is further configured to send the first key generation capability combination to the network element.

23. The apparatus according to claim 22, wherein the processor is further configured to: receive to-be-authenticated information from the network element, wherein the to-be-authenticated information comprises a second key generation capability combination, and the second key generation capability combination comprises at least one key generation capability; and parse the to-be-authenticated information, and determine whether the second key generation capability combination comprised in the to-be-authenticated information is the same as the first key generation capability combination.

24. The apparatus according to claim 23, wherein the to-be-authenticated information is an authentication management field AMF; and
the processor is specifically configured to: parse the AMF, and determine whether the second key generation capability combination comprised in the AMF is the same as the first key generation capability combination.

25. The apparatus according to claim 23, wherein the to-be-authenticated information is a message authentication code MAC, and the MAC is generated by a server through calculation based on the first key generation capability combination; and
the processor is specifically configured to: obtain an expected message authentication code XMAC through calculation based on the first key generation capability combination; and determine, for the terminal, that the second key generation capability combination is the same as the first key generation capability combination when the terminal determines that the XMAC is the same as the MAC.

26. The apparatus according to any one of claims 21 to 25, wherein the processor is specifically configured to receive an authentication request sent by the network element, wherein the authentication request comprises the selected key generation capability.

27. The apparatus according to claim 26, wherein the authentication request further comprises any one or combination of the following: a security capability of the terminal, the second key generation capability combination, a selected integrity algorithm, and a selected encryption algorithm.

28. The apparatus according to claim 26 or 27, wherein the authentication request is an authentication request on which integrity protection has been performed.

29. The apparatus according to any one of claims 23 to 28, wherein the processor is specifically configured to generate the first key parameter and the first base key after determining that the second key generation capability combination comprised in the to-be-authenticated information is the same as the first key generation capability combination.

30. The apparatus according to any one of claims 21, wherein the processor is specifically configured to receive a non-access stratum security mode command from the network element, wherein the non-access stratum security mode command comprises the selected key generation capability.

31. The apparatus according to claim 30, wherein the non-access stratum security mode command further comprises a second key parameter, a second key generation capability combination, a security capability of the terminal, a selected integrity algorithm, and a selected encryption algorithm, and the second key parameter is a key parameter generated by the network element based on the selected key generation capability; and
the processor is specifically configured to: authenticate integrity of the non-access stratum security mode command based on the non-access stratum security mode command; generate the first key parameter based on the selected key generation capability after the authentication performed on the integrity of the non-access stratum security mode command succeeds; and generate the first base key based on the first key parameter and the second key parameter.

32. The apparatus according to claim 21, wherein the processor is further configured to generate a non-access stratum key based on the first base key, wherein the non-access stratum key comprises a non-access stratum encryption key and a non-access stratum integrity key.

33. The apparatus according to claim 32, wherein the processor is specifically configured to: generate a non-access stratum security mode complete command, wherein the non-access stratum security mode complete command carries the first key parameter; perform integrity protection on the non-access stratum security mode complete command by using the non-access stratum integrity key; and send, to the network element, the non-access stratum security mode complete command on which the integrity protection has been performed.

34. A key obtaining apparatus, comprising a memory and a processor, wherein the memory is configured to store a program, and the processor is configured to invoke the program in the memory to perform the following method:
the processor is configured to: determine a selected key generation capability based on a first key generation capability combination, wherein the first key generation capability combination comprises at least one key generation capability of a terminal; send the selected key generation capability to the terminal; and receive a first key parameter sent by the terminal, wherein the first key parameter is generated by the terminal based on the selected key generation capability.

35. The apparatus according to claim 34, wherein the processor is further configured to receive the first key generation capability combination sent by the terminal.

36. The apparatus according to claim 34 or 35, wherein the processor is specifically configured to send an authentication request to the terminal, wherein the authentication request comprises the selected key generation capability.

37. The apparatus according to claim 36, wherein the authentication request further comprises any one or combination of the following: a security capability of the terminal, a second key generation capability combination, a selected integrity algorithm, and a selected encryption algorithm.

38. A key obtaining apparatus, comprising a memory and a processor, wherein the memory is configured to store a program, and the processor is configured to invoke the program in the memory to perform the following method:
the processor is configured to: obtain a selected key generation capability, wherein the selected key generation capability is determined based on a first key generation capability combination; generate a fourth key parameter based on the selected key generation capability; and send the fourth key parameter to the terminal.

39. The apparatus according to claim 38, wherein the processor is further configured to: receive a first key parameter sent by the network element; and generate an access stratum key based on the first key parameter and the fourth key parameter.

40. The apparatus according to claim 38, wherein the processor is further configured to: receive a third key parameter sent by the terminal, wherein the third key parameter is generated based on the first key generation capability combination; and generate an access stratum key based on the third key parameter and the fourth key parameter.
